Europäisches Patentamt

European Patent Office

Office européen des brevets

(11) Veröffentlichungsnummer: **0 209 039 B1**

(12) **EUROPÄISCHE PATENTSCHRIFT**

(45) Veröffentlichungstag der Patentschrift: **18.03.92**

(51) Int. Cl.⁵: **C01C 3/02**

(21) Anmeldenummer: **86109261.7**

(22) Anmeldetag: **07.07.86**

(54) **Verfahren zur Spaltung von Formamid zu Blausäure und Wasser.**

(30) Priorität: **19.07.85 DE 3525749**

(43) Veröffentlichungstag der Anmeldung:
**21.01.87 Patentblatt 87/04**

(45) Bekanntmachung des Hinweises auf die
Patenterteilung:
**18.03.92 Patentblatt 92/12**

(84) Benannte Vertragsstaaten:
**BE CH DE FR GB IT LI NL**

(56) Entgegenhaltungen:
**DE-B- 1 000 796**
**DE-B- 1 007 303**
**DE-C- 476 662**
**DE-C- 477 437**
**US-A- 1 876 213**

**Chemical Abstracts, Band 64, Nr. 10, 1966,
Spalte 13796c Columbus, Ohio, US;
K.VITZESLAV et al.: "Apparatus for the continuous preparation of low concentrations of
hydrogen cyanide and cyanogen chloride in
air"& CHEM. LISTY 60(3), 347-9 (1966)**

(73) Patentinhaber: **BASF Aktiengesellschaft
Carl-Bosch-Strasse 38
W-6700 Ludwigshafen(DE)**

(72) Erfinder: **von Oehsen, Ubbo, Dr.
Carl-Bosch-Ring 2
W-6710 Frankenthal(DE)**
Erfinder: **Stecher, Karlheinz, Dr.
Osloer Weg 42
W-6700 Ludwigshafen(DE)**
Erfinder: **Koehler, Waldemar, Dr.
Max-Slevogt-Strasse 28
W-6710 Frankenthal(DE)**
Erfinder: **Mueller, Berthold, Dr.
Darmstaedter Strasse 103
W-6140 Bensheim 3(DE)**
Erfinder: **Brunnmueller, Fritz, Dr.
Alsenzstrasse 7
W-6703 Limburgerhof(DE)**
Erfinder: **Schneider, Rolf, Dr.
Feldbergstrasse 21
W-6800 Mannheim 1(DE)**

## Beschreibung

Die Erfindung betrifft ein Verfahren zur thermolytischen Spaltung von Formamid zu Blausäure und Wasser an hochgesinterten Aluminiumoxid- oder Aluminiumoxid-Siliciumoioxid-Formkörpern oder an hochtemperaturkorrosionsfesten Edelstahl-Füllkörpern bei gleichzeitiger Anwesenheit von Luftsauerstoff, das sich insbesondere durch hohe HCN-Selektivität und hohen Formamidumsatz auszeichnet.

Es ist bekannt, Formamid in Gegenwart von Katalysatoren, wie beispielsweise Eisenoxid-Zinkoxid auf Siliziumdioxid, in endothermer Reaktion zu Blausäure und Wasser zu spalten. Dabei läuft als Nebenreaktion, die nicht vollständig verhindert werden kann, die ebenfalls endotherme Spaltreaktion zu Ammoniak und Kohlenmonoxid ab, d.h. die HCN-Selektivität kann 100 % nicht vollständig erreichen.

In der DE-C-476 662 wird ein Verfahren zur Herstellung von Cyanwasserstoff aus Formamid beschrieben, bei dem als Katalysatoren mit Thoriumoxid, Tonerde, Titanoxid, Kieselsäuregel oder ähnlichem imprägnierte Bimssteinkörner verwendet werden. Es wird insbesondere empfohlen, bei geringen Verweilzeiten, insbesondere weniger als 0,1 sec, und unter vermindertem Druck zu arbeiten.

Die US-A-1 876 213 betrifft ein Verfahren zur thermischen Spaltung von Formamid in Blausäure und Wasser unter Verwendung von hochgesintertem Aluminiumoxid als Katalysator.

Gemäß DE-B-1 000 796 ist es bekannt, die thermolytische Spaltung von Formamid in Cyanwasserstoff und Wasser zur Aufrechterhaltung der Katalysatoraktivität in Gegenwart von Luft durchzufuhren.

Nachteilig an den oben genannten großtechnisch verwendeten Katalysatoren ist ihre verhältnismäßig geringe mechanische Abriebfestigkeit, ihre geringe Temperaturwechselbeständigkeit und die Tatsache, daß im Verlauf der Reaktion auf dem Katalysator Kohlenstoff und Crackprodukte abgeschieden werden, die zum Nachlassen der Aktivität des Formamid-Umsatzes und der HCN-Selektivität führen.

Aufgabe der Erfindung ist es, stabile Formkörper zu entwickeln, die eine hohe HCN-Selektivität und einen hohen Formamid-Umsatz im großtechnischen Dauerbetrieb, d.h. mit hohen Standzeiten, ermöglichen.

Es wurde nun eine Verfahren zur Spaltung von Formamid zu Blausäure und Wasser gefunden, bei dem man gasförmiges, überhitztes Formamid bei Temperaturen von 300 bis 480°C, bevorzugt von 300 bis 400°C, unter einem vermindertem Druck von 1 bis 350 mbar, bevorzugt 50 bis 150 mbar, mit einem Volumenanteil von 0,1 bis 10 % Luft, bevorzugt 1 - 3 % Luft, in einen Rohrbündelreaktor einleitet und bei Temperaturen von 450 bis 590°C, bevorzugt 500 bis 540°C, und mittleren Verweilzeiten von 0,01 bis 0,25 sec., bevorzugt 0,01 bis 0,15 sec., über hochgesinterte Formkörper, bestehend aus 50 bis 100, bevorzugt 85 - 95 Gew.% Aluminiumoxid, und 50 bis 0, bevorzugt 15 bis 5 Gew.% Siliziumdioxid, leitet, wobei die Formkörper in Form von Raschig-Ringen, Pallringen, Sattelkörpern, Tabletten oder Kugeln eingesetzt werden und ihr Durchmesser zum inneren Durchmesser des verwendeten Rohres im Verhältnis von 1 : 3 bis 1 : 10 steht.

Das erfindungsgemäße Verfahren ist von bestechender Einfachheit. Die HCN-Selektivität ist mit 96 % überraschend hoch und der Umsatz kann auch im Dauerbetrieb auf 99 % gesteigert werden. Ein hervorzuhebender Vorteil des erfindungsgemäßen Verfahrens ist die große Temperaturbeständigkeit und Korrosionsfestigkeit der verwendeten Formkörper sowie ihre überlegene Abriebfestigkeit und vorteilhaft hohe Wärmeleitfähigkeit.

Die erfindungsgemäßen Formkörper werden äußerst langsam desaktiviert und zwar dadurch, daß durch den gleichzeitig eingeleiteten Luftsauerstoff eine Abscheidung inhibierend wirkender Crackprodukte nahezu vollständig unterdrückt wird, so daß häufiges Regenerieren entfällt. Die zeitlichen Abstände von vorzunehmenden Regenerierungen der Formkörper, üblicherweise 4 Wochen, werden bis zu 6 bis 10 Monaten verlängert.

Inwieweit es sich bei der Formamidspaltung um einen thermolytischen Effekt an der Oberfläche der Formkörper handelt, ist im Hinblick auf den Reaktionsmechanismus nicht näher bekannt.

Zweckmäßigerweise geht man so vor, daß man flüssiges Formamid in einem Rohrbündelwärmetauscher unter vermindertem Druck von 1 bis 350 mbar und bei Temperaturen von 160 bis 200°C verdampft. Noch im Verdampferrohr werden die Formamiddämpfe auf Temperaturen von 300 bis 480°C erhitzt.

Anschließend wird erfindungsgemäß Luft in einer Menge zugeführt, daß der Volumenanteil 0,1 bis 10 Vol.%, bevorzugt 1 bis 3 %, beträgt. Das entspricht etwa einer Menge von 5 - 50 l Luft pro kg Formamiddampf. Der Luftanteil kann gegebenenfalls in vorgewärmtem Zustand zugeführt werden. Diese Luftzufuhr dient sowohl der Erhöhung des Formamidumsatzes als auch der Erhöhung der HCN-Selektivität. Der Vorteil dieser Luftzufuhr war nicht vorhersehbar, da bisher nach dem Stand der Technik mit Gasen, wie Stickstoff oder Ammoniak, gearbeitet wurde.

Das Formamid-Luft-Gemisch wird bei der eigentlichen Spaltung in einem Mehrrohrreaktor auf Temperaturen von 450 bis 590°C, bevorzugt 500 bis 540°C, und Verweilzeiten von 0,01 bis 0,25 sec., bevorzugt 0,01 bis 0,15 sec., erhitzt und an hochgesinterten Formkörpern, bestehend aus 50 bis 100 Gew.%, bevorzugt 85 bis 95 Gew.% Aluminiumoxid, und 50 bis 0 Gew.% bevorzugt 15 bis 5 Gew.% Siliziumoxid, zu Blausäure und Wasser gespalten. Dabei wird ein Druck zwischen 1 bis 200 mbar, bevorzugt 50 bis 150 mbar, eingestellt.

Hochgesintertes Aluminiumoxid und Aluminiumoxid-Siliziumdioxid-Gemische der oben angegebenen Zusammensetzung sind an sich bekannt. Sie können beispielsweise in folgender Weise hergestellt werden: Frisch gefälltes Aluminumhydroxid bzw. entsprechende Mischungen mit Kieselgel werden nach leichter Trocknung in die gewünschten Formkörper gepreßt und anschließend bei Temperaturen von 1200 bis 1600°C, bevorzugt 1500 bis 1600°C, mindestens 10 Stunden geglüht. Dabei entsteht ein dichtgesintertes, nicht poröses Sinterprodukt.

Als mögliche Füllkörper kommen sowohl geordnete als auch ungeordnete Formlinge in Betracht, nämlich Raschig-Ringe, Pallringe, Tabletten, Kugeln und Sattelkörper. Wesentlich ist hierbei, daß die Packungen bei mäßigem Druckverlust guten Wärmeübergang ermöglichen. Die Größe bzw. Geometrie der verwendeten Formlinge richtet sich zweckmäßigerweise nach dem Innendurchmesser der mit diesen Formkörpern zu füllenden Rohre, in der Regel Edelstahl- oder Eisenrohre mit einem inneren Durchmesser von 30 bis 100 mm. Die Verhältnisse von Durchmesser des Formkörpers zum inneren Durchmesser des verwendeten Rohres betragen 1 : 3 bis 1 : 10, vorzugsweise 1 : 5 bis 1 : 8.

Darüber hinaus wurde gefunden, daß das erfindungsgemäße Verfahren sich ebenso vorteilhaft durchführen läßt, wenn man das oben definierte gasförmige Gemisch unter den oben definierten Bedingungen über entsprechende Formkörper aus hochtemperatur-korrosionsbeständigen Chrom-Nickel-Edelstählender Zusammensetzung 18 bis 21 Gew.-% Chrom, 9 bis 13 Gew.-% Nickel, 0 bis 3 Gew.-% Silizium und Rest zu 100 Gew.-% Eisen leitet. Die Chrom-Nickel-Edelstähle wurden zweckmäßig in Form der gleichen, oben beschriebenen Füllkörper, bevorzugt in Form von Raschig-Ringen, verwendet.

Überraschenderweise werden in Gegenwart von Luft mit dichtgesinterten Aluminiumoxid- bzw. Aluminiumoxid-Silizimdioxid-Füllkörpern, die nicht poröse Oberflächen aufweisen sowie mit hochtemperatur-korrosionsbeständigen Edelstahl-Füllkörpern bessere Ergebnisse erzielt als mit den in der Literatur beschriebenen porösen Katalysatorkörpern.

Gegenstand der Erfindung ist auch die erstmalige Verwendung dieser Formkörper aus hochgesintertem Aluminiumoxid, oder Aluminiumoxid-Siliziumdioxid-Gemischen oder aus Chrom-Nickel-Edelstahlen bei der Spaltung von Formamid unter den oben angegebenen Bedingungen in Gegenwart von 0,1 bis 10 Vol.% Luft, bezogen auf das gasförmige Formamid.

Weitere Vorteile der Formkörper sind die Korrosionsfestigkeit, die Temperaturwechselbeständigkeit, die gute Wärmeleitfähigkeit, Abrieb- und Bruchfestigkeit. Mit derartigen Formkörpern, wie beispielsweise Raschig-Ringe oder Sattelkörper, lassen sich optimale Verweilzeiten und Raum-Zeit-Ausbeuten erreichen.

Ein besonderer Vorteil der erfindungsgemäßen Formkörper ist, daß häufiges Regenerieren entfällt. Eine Regenerierung ist angezeigt, wenn der Umsatz von 99 auf 90 % abgesunken ist. Die Regenerierung erfolgt, indem der Formamidzulauf gestoppt wird und man bei denselben Temperaturen 2 -4 Stunden Luft über die Formkörper leitet. Hierbei werden die Crackprodukte vollkommen abgebrannt, so daß die Inhibierung an den Formkörpern vollständig aufgehoben wird.

Das erfindungsgemäße Verfahren besticht durch seine Einfachheit. Die relativ hohen Temperaturen, die angegebenen Druckbereiche, kurzen Verweilzeiten und der Luftzusatz führen im Hinblick auf die Selektivität, den Umsatz und die Ausbeute zu einem überraschenden Optimum. Mit steigendem Druck fällt nicht nur die Selektivität sondern überraschenderweise auch der Umsatz. Mit steigenden Temperaturen bis max. 600°C steigen Umsatz und anders als in der Literatur beschrieben auch die Selektivität. Je geringer die Verweilzeit desto höher ist die Selektivität.

Für großtechnische Maßstäbe stehen in der Regel kaum Anlagen für Drucke von 1 mbar zur Verfügung, so daß für großtechnische Verfahren Drucke von 50 bis 150 mbar, bevorzugt 80 bis 110 mbar, ein Optimum darstellen. Bevorzugt für die Spaltung sind die oben angegebenen Aluminiumoxid-Siliziumdioxid-Gemische. Jedoch führen auch reines Aluminiumoxid und Chrom-Nickel-Edelstähle unter gleichen Reaktionsbedingungen zu ähnlich guten Ergebnissen.

Reines, bei 1400°C gesintertes Aluminiumoxid ist gemäß dem DP 498 733 bereits verwendet worden, jedoch ohne Zusatz von Luft aber in Gegenwart von Gasen, wie Stickstoff oder Ammoniak, werden Ausbeuten an Blausäure von nur 87,5 bis 91,5 % erreicht, wobei der Umsatz schon nach kurzer Zeit deutlich zurückgeht und dann ständig weiter abfällt.

Weiterhin sei erwähnt, daß Katalysatoren, die Alkali enthaltende Alumosilikate darstellen, z.B. in Form von Bimsstein gemäß DP 476 662 und 586 861, aufgrund des Alkaligehaltes vor allem im Dauerbetrieb zu niederen Ausbeuten führen.

## 1. Beispiel

7 kg/h flüssiges Formamid werden von unten in einen senkrecht stehenden Rohrbündelwärmetauscher, der mit Hilfe eines Salzbades von 550°C beheizt wird, kontinuierlich eingeleitet, unter vermindertem Druck bei 200 mbar verdampft und weiter auf 400°C erhitzt. Die Verdampferrohre sind 140 cm lang und haben einen Innendurchmesser von 16 mm.

In die überhitzten Formamid-Dämpfe werden 150 l Luft/h kont. eingeleitet.

Das gasförmig überhitzte Formamid-Luft-Gemisch wird in einen senkrecht stehenden Einrohrreaktor von unten eingeleitet, der mit Raschigringen, bestehend aus einem hochgesinterten Alumosilikat, gefüllt ist und von außen mit einem Salzbad von ca. 580°C beheizt wird. Als Formkörper wird ein hochgesintertes Aluminiumoxid-Siliziumdioxid-Gemisch der Zusammensetzung 93 % $Al_2O_3$ und 7 % $SiO_2$ in Form von Raschigringen der Größe 15 x 15 x 2 mm verwendet.

Die Rohre haben eine Länge von 140 cm und einen Innendurchmesser von 53 mm. Bei einem Druck von ca. 130 mbar und einer Innentemperatur von 520 bis 540°C wird der überhitzte Formamiddampf zu Blausäure und Wasser gespalten.

Der Umsatz beträgt 98 %, die Selektivität 95,9 %. Die mittlere Verweilzeit beträgt 0,07 Sekunden.

## 2. Beispiel

17,5 kg/h flüssiges Formamid werden von unten in einen senkrecht stehenden Rohrbündelwärmetauscher, der mit Hilfe eines Salzbades von 550°C beheizt wird, kontinuierlich eingeleitet, unter vermindertem Druck bei 250 mbar verdampft und weiter auf 350°C erhitzt. Die Verdampferrohre sind 140 cm lang und haben einen Innendurchmesser von 16 mm.

In die überhitzten Formamid-Dämpfe werden 350 l Luft/h kont. eingeleitet.

Das gasförmig überhitzte Formamid-Luft-Gemisch wird in einen senkrecht stehenden Einrohrreaktor von unten eingeleitet, der mit Raschigringen, bestehend aus einem hochgesinterten Alumosilikat, gefüllt ist und von außen mit einem Salzbad von 600°C beheizt wird. Als Formkörper wird ein hochgesintertes Aluminiumoxid-Siliziumdioxid-Gemisch der Zusammensetzung 93 % $Al_2O_3$ und 7 % $SiO_2$ in Form von Raschigringen der Größe 15 x 15 x 2 mm verwendet.

Die Rohre haben eine Länge von 140 cm und einen Innendurchmesser von 53 mm. Bei einem Druck von ca. 130 mbar und einer Innentemperatur von 520 - 540°C wird der überhitzte Formamiddampf zu Blausäure und Wasser gespalten.

Der Umsatz beträgt 98,6 %, die Selektivität 96,7 %. Die Mittlere Verweilzeit beträgt 0,03 Sekunden.

## 3. Beispiel

7,9 kg/h flüssiges Formamid werden von unten in einen senkrecht stehenden Rohrbündelwärmetauscher, der mit Hilfe eines Salzbades von 550°C beheizt wird, kontinuierlich eingeleitet, unter vermindertem Druck bei 200 mbar verdampft und weiter auf 400°C erhitzt. Die Verdampferrohre sind 140 cm lang und haben einen Innendurchmesser von 16 mm.

In die überhitzten Formamid-Dämpfe werden 140 l Luft/h kont. eingeleitet.

Das gasförmig überhitzte Formamid-Luft-Gemisch wird in einen senkrecht stehenden Einrohrreaktor von unten eingeleitet, der mit Raschigringen, bestehend aus hochtemperatur-korrosionsbeständigem Edelstahl gefüllt ist und von außen mit einem Salzbad von ca. 580°C beheizt wird. Edelstahl wird ein Chrom-Nickel-Stahl der Zusammensetzung 20 Gew.-% Cr, 12 Gew. % Ni, 2 Gew. % Si und 66 Gew.-% Fe eingesetzt.

Die Rohre haben eine Länge von 140 cm und einen Innendurchmesser von 53 mm. Bei einem Druck von ca. 130 mbar und einer Innentemperatur von 520 bis 550°C wird der überhitzte Formamiddampf zu Blausäure und Wasser gespalten.

Der Umsatz beträgt 97,5 %, die Selektivität 94,8 %. Die mittlere Verweilzeit beträgt 0,07 Sekunden.

## Patentansprüche

1. Verfahren zur Spaltung von Formamid in Blausäure und Wasser, dadurch gekennzeichnet, daß an gasförmiges, überhitztes Formamid bei Temperaturen von 300 bis 480°C unter vermindertem Druck von 1 bis 350 mbar und mit einem Volumenanteil von 0,1 bis 10 % Luft in einen Rohrbündelreaktor einleitet und bei Temperaturen von 450 bis 590°C und einer mittleren Verweilzeit von 0,01 bis 0,25 sec. über hochgesinterte Formkörper, bestehend aus 50 - 100 Gew.% Aluminiumoxid und 50 bis 0 Gew.% Siliziumdioxid, oder über hochtemperatur-korrosionsfeste Chrom-Nickel-Edelstahl-Formkörper der Zusammensetzung 18 bis 21 Gew.-% Chrom, 9 bis 13 Gew.-% Nickel, 0 bis 3 Gew.-% Silizium und Rest zu 100 Gew.-% Eisen leitet, wobei die Formkörper in Form von Raschig-Ringen, Pallringen, Sattelkörpern, Tabletten oder Kugeln eingesetzt werden und ihr Durchmesser zum inneren Durchmesser des verwendeten Rohres im Verhältnis von 1 : 3 bis 1 : 10 steht.

2. Verfahren zur Spaltung von Formamid in Blausäure und Wasser, dadurch gekennzeichnet, daß man gasförmiges, überhitztes Formamid bei Temperaturen von 300 bis 400°C unter vermindertem Druck von 50 bis 150 mbar und mit einem Volumenanteil von 1,0 bis 3,0 % Luft in einen Rohrbündelreaktor einleitet und bei Temperaturen von 500 bis 540°C und einer mittleren Verweilzeit von 0,01 bis 0,15 sec. über hochgesinterte Formkörper, bestehend aus 85 - 95 Gew. % Aluminiumoxid und 15 bis 5 Gew.% Silizidioxid, oder Chrom-Nickel-Edelstahl-Formkörper der Zusammensetzung 18 bis 21 Gew.-% Chrom, 9 bis 13 Gew.-% Nickel, 0 bis 3 Gew.-% Silizium und Rest zu 100 Gew.-% Eisen leitet, wobei die Formkörper in Form von Raschig-Ringen, Pallringen, Sattelkörpern, Tabletten oder Kugeln eingesetzt werden und ihr Durchmesser zum inneren Durchmesser des verwendeten Rohres im Verhältnis von 1 : 3 bis 1 : 10 steht.

3. Verwendung von hochgesinterten Formkörpern, bestehend aus 50 bis 100 Gew.-% Aluminiumoxid und 50 bis 0 Gew.-% Siliziumdioxid, die in Form von Raschig-Ringen, Pallringen, Sattelkörpern, Tabletten oder Kugeln eingesetzt werden und deren Durchmesser zum inneren Durchmesser des verwendeten Rohres im Verhältnis von 1 : 3 bis 1 : 10 steht, bei der Spaltung von Formamid zu Blausäure und Wasser in Gegenwart von 0,1 bis 10 Vol.% Luft, bezogen auf das gasförmige Formamid, bei Temperaturen von 450 bis 590°C.

4. Verwendung von hochgesinterten Formkörpern, bestehend aus 85 bis 95 Gew.-% Aluminiumoxid und 15 bis 5 Gew.-% Siliziumdioxid, die in Form von Raschig-Ringen, Pallringen, Sattelkörpern, Tabletten oder Kugeln eingesetzt werden und deren Durchmesser zum inneren Durchmesser des verwendeten Rohres im Verhältnis von 1 : 3 bis 1 : 10 steht, bei der Spaltung von Formamid zu Blausäure und Wasser in Gegenwart von 1 bis 3 Vol.-% Luft, bezogen auf das gasförmige Formamid, bei Temperaturen von 500 bis 540°C.

5. Verwendung von hochtemperatur-korrosionsfesten Chrom-Nickel-Edelstahl-Formkörpern der Zusammensetzung 18 bis 21 Gew.-% Chrom, 9 bis 13 Gew.-% Nickel, 0 bis 3 Gew.-% Silizium und Rest zu 100 Gew.-% Eisen, die in Form von Raschig-Ringen, Pallringen, Sattelkörpern, Tabletten oder Kugeln eingesetzt werden und deren Durchmesser zum inneren Durchmesser des verwendeten Rohres im Verhältnis von 1 : 3 bis 1 : 10 steht, bei der Spaltung von Formamid zu Blausäure und Wasser in Gegenwart von 0,1 bis 10 Vol.-% Luft, bezogen auf das gasförmige Formamid, bei Temperaturen von 450 bis 590°C.

6. Verwendung von hochtemperatur-korrosionsfesten Chrom-Nickel-Edelstahl-Formkörpern der Zusammensetzung 18 bis 21 Gew.% Chrom, 9 bis 13 Gew.-% Nickel, 0 bis 3 Gew.-% Silizium und Rest zu 100 Gew.-% Eisen, die in Form von Raschig-Ringen, Pallringen, Sattelkörpern, Tabletten oder Kugeln eingesetzt werden und deren Durchmesser zum inneren Durchmesser des verwendeten Rohres im Verhältnis von 1 : 3 bis 1 : 10 steht, nach Anspruch 5 bei der Spaltung von Formamid zu Blausäure und Wasser in Gegenwart von 1 bis 3 Vol.-% Luft, bezogen auf das gasförmige Formamid bei Temperaturen von 500 bis 540°C.

## Claims

1. A process for the cleavage of formamide to give hydrocyanic acid and water, wherein gaseous, superheated formamide together with from 0.1 to 10% by volume of air is introduced into a tube bundle reactor at from 300 to 480°C, under reduced pressure of from 1 to 350 mbar, and passed over highly sintered moldings consisting of 50-100% by weight of alumina and 50-0% by weight of silica, at from 450 to 590°C, the mean residence time being from 0.01 to 0.25 sec, or over high-temperature corrosion-resistant chromium nickel stainless steel moldings composed of from 18 to 21% by weight of chromium, from 9 to 13% by weight of nickel and from 0 to 3% by weight of silicon, the remainder to 100% by weight being iron, and the moldings are used in the form of Raschig rings, Pall rings, saddle elements, pellets or spheres and the ratio of their diameter to the internal diameter of the tube used is from 1 : 3 to 1 : 10.

2. A process for the cleavage of formamide to give hydrocyanic acid and water, wherein gaseous, superheated formamide together with from 1.0 to 3.0% by volume of air is introduced into a tube bundle reactor at from 300 to 400°C, under reduced pressure of from 50 to 150 mbar, and passed over highly sintered moldings consisting of 85-95% by weight of alumina and 15-5% by weight of silica, at from 500 to 540°C, the mean residence time being from 0.01 to 0.15 sec, or over chromium nickel stainless steel moldings composed of from 18 to 21% by weight of chromium, from 9 to 13% by weight of nickel and from 0 to 3% by weight of silicon, the remainder to 100% by weight being iron, and the moldings are used in the form of Raschig rings, Pall rings, saddle elements, pellets or spheres and the ratio of their diameter to the internal diameter of the tube used is from 1 : 3 to 1 : 10.

3. Use of highly sintered moldings consisting of from 50 to 100% by weight of alumina and from 50 to 0% by weight of silica, which are used in the form of Raschig rings, Pall rings, saddle elements, pellets or spheres and the ratio of whose diameter to the internal diameter of the tube used is from 1 : 3 to 1 : 10, in the cleavage of formamide to give hydrocyanic acid and water in the presence of from 0.1 to 10% by volume, based on the gaseous formamide, of air at from 450 to 590°C.

4. Use of highly sintered moldings consisting of from 85 to 95% by weight of alumina and from 15 to 5% by weight of silica, which are used in the form of Raschig rings, Pall rings, saddle elements, pellets or spheres and the ratio of whose diameter to the internal diameter of the tube used is from 1 : 3 to 1 : 10, in the cleavage of formamide to give hydrocyanic acid and water in the presence of from 1 to 3% by volume, based on the gaseous formamide, of air at from 500 to 540°C.

5. Use of high-temperature corrosion-resistant chromium nickel stainless steel moldings composed of from 18 to 21% by weight of chromium, from 9 to 13% by weight of nickel and from 0 to 3% by weight of silicon, the remainder to 100% by weight being iron, which are used in the form of Raschig rings, Pall rings, saddle elements, pellets or spheres and the ratio of whose diameter to the internal diameter of the tube used is from 1 : 3 to 1 : 10, in the cleavage of formamide to give hydrocyanic acid and water in the presence of from 0.1 to 10% by volume, based on the gaseous formamide, of air at from 450 to 590°C.

6. Use of high-temperature corrosion-resistant chromium nickel stainless steel moldings composed of from 18 to 21% by weight of chromium, from 9 to 13% by weight of nickel and from 0 to 3% by weight of silicon, the remainder to 100% by weight being iron, which are used in the form of Raschig rings, Pall rings, saddle elements, pellets or spheres and the ratio of whose diameter to the internal diameter of the tube used is from 1 : 3 to 1 : 10 according to claim 5, in the cleavage of formamide to give hydrocyanic acid and water in the presence of from 1 to 3% by volume, based on the gaseous formamide, of air at from 500 to 540°C.

## Revendications

1. Procédé de séparation du formaldéhyde en acide cyanhydrique et en eau, caractérisé en ce que l'on introduit du formaldéhyde surchauffé, sous forme gazeuse, à des températures de 300 à 480°C et sous une pression réduite de 1 à 350 mbars et avec une fraction volumique d'air de 0,1 à 10%, dans un réacteur à faisceau de tubes et on le fait passer, à des températures de 450 à 590°C et avec une durée de séjour moyenne de 0,01 à 0,25 seconde, sur des corps moulés fortement frittés, qui se composent de 50 à 100% en poids d'oxyde d'alumium et de 50 à 0% en poids de dioxyde de silicium, ou sur des corps moulés en chrome-nickel-acier inoxydable, qui résistent à la corrosion à température élevée, dont la composition répond à 18 à 21% en poids de chrome, 9 à 13% en poids de nickel, 0 à 3% en poids de silicium, le reste étant constitué de fer, où on utilise les corps moulés sous la forme d'anneaux Raschig, d'anneaux de Pall, des corps en forme de selle, des comprimés ou des billes et leur diamètre vis-à-vis du diamètre interne du tube utilisé varie dans le rapport de 1:3 à 1:10.

2. Procédé de séparation du formamide en acide cyanhydrique et en eau, caractérisé en ce que l'on introduit du formamide surchauffé, sous forme gazeuse, à des températures de 300 à 400°C et sous une pression réduite de 50 à 150 mbars et avec une fraction volumique d'air de 1,0 à 3,0% dans un réacteur à faisceau de tubes et on le fait passer, à des températures de 500 à 540°C et avec une durée moyenne de séjour de 0,01 à 0,15 seconde, sur des corps moulés fortement frittés, qui se composent de 85 à 95% en poids d'oxyde d'alumium et de 15 à 5% en poids de dioxyde de silicium, ou sur des corps moulés de chrome-nickel-acier inoxydable, dont la composition varie de 18 à 21% en poids de chrome, 9 à 13% en poids de nickel, 0 à 3% en poids de silicium, le reste jusqu'à 100% étant constitué de fer, où on utilise les corps moulés sous la forme d'anneaux Raschig, d'anneaux de Pall, des corps en forme de selle, des comprimés ou des billes et leur diamètre vis-à-vis du diamètre interne du tube utilisé varie dans le rapport de 1:3 à 1:10.

3. Utilisation de corps moulés fortement frittés, qui se composent de 50 à 100% en poids d'oxyde d'aluminium et de 50 à 0% en poids de dioxyde de silicium, qui s'utilisent sous forme d'anneaux Raschig, d'anneaux de Pall, de corps en forme de selle, de comprimés ou de billes et dont le diamètre par rapport au diamètre interne du tube utilisé flucutue dans le rapport de 1:3 à 1:10, pour la séparation du formamide en acide cyanhydrique et en eau, en présence de 0,1 à 10% en volume d'air, par rapport au formamide gazeux, à des températures de 450 à 590°C.

4. Utilisation de corps moulés fortement frittés, qui se composent de 85 à 95% en poids d'oxyde d'aluminium et de 15 à 5% de dioxyde de silicium, qui s'utilisent sous la forme d'anneaux Raschig, d'anneaux de Pall, de corps en forme de selle, de comprimés ou de billes et dont le diamètre par rapport au diamètre interne du tube utilisé fluctue dans le rapport de 1:3 à 1:10, en vue de la séparation du formamide en acide cyanhydrique et en eau, en présence de 1à 3% en volume d'air, par rapport au formamide gazeux, à des températures de 500 à 540°C.

5. Utilisation de corps moulés en chrome-nickel-acier inoxydable, résistant à la corrosion à haute température, d'une composition qui varie de 18 à 21% en poids de chrome, 9 à 13% en poids de nickel, 0 à 3% de silicium, le reste étant constitué de fer jusqu'à 100%, qui s'utilisent sous la forme d'anneaux Raschig, d'anneaux de Pall, de corps en forme de selle, de comprimés ou de billes et dont le diamètre par rapport au diamètre interne du tube utilisé varie dans le rapport de 1:3 à 1:10, en vue de la séparation du formamide en acide cyanhydrique et en eau, en présence de 0,1 à 10% en volume d'air, par rapport au formamide gazeux, à des températures de 450 à 590°C.

6. Utilisation de corps moules en chrome-nickel-acier inoxydable, résistant à la corrosion à haute température, d'une composition qui varie de 18 à 21% en poids de chrome, 9 à 13% en poids de nickel, 0 à 3% de silicium, le reste étant constitué de fer jusqu'à 100%, qui s'utilisent sous la forme d'anneaux Raschig, d'anneaux de Pall, de corps en forme de selle, de comprimés ou de billes et dont le diamètre par rapport au diamètre interne du tube utilisé varie dans le rapport de 1:3 à 1:10, en vue de la séparation du formamide en acide cyanhydrique et en eau, en présence de 0,1 à 3% en volume d'air, par rapport au formamide gazeux, à des températures de 500 à 540°C.